# DEMANDE DE BREVET EUROPEEN

(11) **EP 3 026 599 A1**
(43) Date de publication de la demande: **01.06.2016**
(21) Numéro de dépôt: 14306914.4
(22) Date de dépôt: 28.11.2014
(51) Int. Cl.: G06K 19/077

(54) **Procédé de fabrication de dispositifs électroniques avec information de personnalisation**

(71) Demandeur: GEMALTO SA, 92190 Meudon (FR)
(72) Inventeur: Ottobon, Stéphane, 13881 GEMENOS Cedex (FR); Audouard, Laurent, 13881 GEMENOS Cedex (FR); Dossetto, Lucile, 13881 GEMENOS Cedex (FR)

(57) **Abrégé**

L'invention porte sur un procédé de fabrication d'un dispositif électronique portable (1A) comportant un support (5), un objet électronique (B1) séparable du support et un espace réservé (15) en surface du support recevant ou destiné à recevoir une information de personnalisation (16) ; Le procédé se distingue en ce qu'il comprend les étapes suivantes :
- réalisation d'au moins une métallisation (4) électriquement conductrice sur le support séparable,
- réalisation du corps (7, 10) de l'objet portable sur au moins une partie de la métallisation,

## Description

### Domaine de l'invention

L'invention porte sur un procédé de fabrication d'un dispositif électronique portable comportant un support, un objet électronique séparable du support et une information de personnalisation sur le support ainsi que le dispositif électronique obtenu et le support à l'état séparé.

L'invention porte en outre sur un ruban de conditionnement d'une pluralité de dispositifs électroniques ainsi fabriqués.

On peut trouver de tels dispositifs ou objets électroniques visés par l'invention, par exemple sous la forme de cartes aux facteurs de forme divers tels que ceux de petits objets électroniques de formats micro-SD (acronyme anglais pour « *Secure Digital* »), Micro-SIM (acronyme anglais pour « *Subscriber Identity Module* ») ou Plug-in SIM, Mini UICC (acronyme anglais pour « *Universal Integrated Circuit Card* »). On peut trouver en outre toute une gamme d'objets électroniques se présentant sous forme de boîtiers, permettant le montage de composants en surface (noté CMS en français ou SMD en anglais pour « Surface Mounted Device »), ainsi que des boîtiers de type BGA (acronyme anglais pour *« Ball Grid Array »)* comportant des billes de connexion. Ces boîtiers comprennent une interface d'alimentation et/ou de communication notamment à contacts électriques ou à antenne.

L'invention concerne plus particulièrement, mais de manière non limitative, la fabrication de dispositifs ou objets électroniques portables sécurisés comme des cartes ou modules à puce qui trouvent notamment leurs applications dans la santé, la banque, les télécommunications ou encore le contrôle d'identité, le contrôle d'accès physique et/ou logique.

### Art antérieur

Comme art antérieur et dispositif électronique le plus proche, on connait la carte SIM décrite notamment dans le brevet EP0521778. Cette carte SIM comporte un corps de carte au format standard ISO 7816 (format carte bancaire) et une mini-carte SIM (mini-SIM) au format réduit par rapport à ce format standard. Cette mini-SIM est délimitée par une prédécoupe dans le corps de carte au format standard ISO 7816 et se trouve reliée au corps de carte par des bretelles sécables manuellement. La mini-carte SIM comporte un module électronique logé dans une cavité ménagé à la surface de la mini carte et/ou carte SIM (un module de carte à puce comprend un microcircuit porté par un film support diélectrique, le microcircuit étant enrobé d'une matière de protection et étant relié à une interface à contacts électriques affleurant en surface du corps de mini carte). La mini-carte SIM est formée dans le corps de la carte au format ISO 7816 et possède la même épaisseur. La surface du corps de carte SIM (voire également carte mini-SIM) comporte également une impression graphique quelconque tel qu'un logo de distributeur ou opérateur de téléphonie mobile et tout autre information marquée en surface.

Par ailleurs, la demande de brevet WO2014044684 décrit un procédé de fabrication de boîtiers ou objets électroniques sur un support. Des jeux de métallisations sont réalisés sur le support avec une densité maximale optimisée, puis on reporte et connecte une puce électronique à chaque jeu de métallisations, on surmoule chaque puce avec une matière de moulage pour réaliser un boîtier de sorte que les métallisations sont transférées dans la matière de surmoulage au moment de la séparation du boîtier amovible. Les boîtiers sont ensuite séparés du support éliminé qui est au cours de la séparation du boîtier ou ultérieurement. Le support présente une adhésivité faible ou altérable et le surmoulage est effectué à la dimension finale du boîtier.

Le document EP1 780 662 décrit la possibilité d'enrober la puce et ses connexions dans un moule dans lequel une pastille de renfort est disposée préalablement à l'étape de moulage de la résine d'enrobage. Une telle pastille de renfort permet de protéger mécaniquement le module électronique. Le module électronique ainsi réalisé est ensuite encarté dans le corps d'un boîtier pour former un dispositif électronique. Pour cela, le module est reporté dans une cavité ménagée dans le corps du boitier.

Le document FR2 833 736 décrit en outre un procédé de surmoulage d'un boîtier sur un support papier amovible. Une fois le boitier surmoulé, une étape ultérieure consiste à usiner une cavité dans le boitier pour y reporter un module électronique et ainsi obtenir une carte à puce. La carte à puce ainsi obtenue est ensuite séparée de son support papier amovible.

D'autre part, pour permettre une plus grande intégration dans les appareils portatifs, tels que les téléphones par exemple, les exigences en termes de réduction d'épaisseur et d'encombrement des dispositifs électroniques sont de plus en plus fortes. Ainsi, par exemple, la carte nano-SIM, encore notée sous le sigle 4FF, dont l'épaisseur est normalisée à 0,67mm, doit présenter une épaisseur réduite de 11% par rapport à la carte micro-SIM, notée sous le sigle 3FF. C'est pourquoi, il devient également important de trouver des solutions pour optimiser les procédés de fabrication, afin de tenir compte de ces exigences et permettre l'obtention de dispositifs électroniques d'épaisseur et d'encombrement réduits.

Les procédés existants nécessitent donc de nombreuses étapes qui contribuent à un coût de fabrication élevé.

### Problème technique

L'invention a donc pour but de remédier à au moins un des inconvénients de l'art antérieur. L'invention vise à diminuer les coûts en intégrant ou facilitant au maximum les opérations généralement utilisées dans la fabrication et distribution des dispositifs électroniques y compris celle consistant à apporter une information de personnalisation sur les dispositifs.

### Résumé de l'invention

Le principe de l'invention repose sur la création d'une zone de personnalisation pour recevoir une information, notamment graphique, sur le support même ou film support diélectrique habituellement destiné à réaliser et véhiculer des modules de carte à puce; ce support métallisé ou film diélectrique métallisé avec l'interface est appelé généralement « lead frame » en terminologie anglo saxonne.

Selon l'invention, l'information généralement apportée sur la surface externe d'un corps de carte à puce s'effectue désormais grâce à l'invention au niveau du film support métallisé même. Ce dernier n'a jusqu'à présent jamais été utilisé ou prévu pour cette fonction.

Généralement, les bobines de support métallisé présentent pour des questions pratiques et de rentabilité, une densité d'emplacement de modules la plus importante possible sans laisser de place perdue. La grille étant généralement gravée, l'homme de l'art recherche à minimiser le métal (cuivre) perdu lors de la gravure et donc à optimiser l'emplacement des modules. Le film support diélectrique pour les modules de carte à puce sont très onéreux (voire plus onéreux que les métallisations) et il convient d'optimiser leur surface avec un maximum d'emplacements de modules par unité de surface.

L'invention requiert d'abord de diminuer la densité d'emplacement de modules sur le support métallisé (film diélectrique métallisé) allant ainsi à contre-courant de la tendance naturelle de productivité de l'homme de l'art ou des besoins de l'industrie. L'invention requiert ensuite de consacrer de l'espace ainsi créé pour apporter une information de personnalisation ou impression graphique. De préférence, on utilise une qualité moindre pour le film support diélectrique avec un compromis quant à la résistance à la traction pour l'entrainement de poste à poste de fabrication.

Ainsi, grâce à l'invention, l'information de personnalisation peut être apportée directement en continu sur le support ou diélectrique métallisé présenté en bobine avec un rendement optimisé de personnalisation.

A cet effet, l'invention a pour objet un procédé de fabrication d'un dispositif électronique portable comportant un support, un objet électronique séparable du support et un espace réservé en surface du support recevant ou destiné à recevoir une information de personnalisation ; Le procédé est caractérisé en ce qu'il comprend les étapes de :
- réalisation d'au moins une métallisation électriquement conductrice sur le support séparable,
- réalisation du corps de l'objet portable sur au moins une partie de la métallisation.

Ainsi, le procédé de fabrication est très simple et permet de supprimer un certain nombre d'étapes conventionnelles dans la fabrication des cartes à puce. Les étapes d'injection du corps de carte ou de moulage, ainsi que les étapes de découpe et d'insertion du module électronique dans une cavité du corps de carte ne sont plus nécessaires.

Grâce à l'invention, on réalise un apport d'information de personnalisation sur le support métallisé de l'objet électronique. Le procédé permet en outre l'obtention d'objets d'épaisseur réduite.

Le procédé comprend d'autres étapes ou caractéristiques ci-après :
- Préalablement à la réalisation du corps, le procédé comprend une étape de report et de connexion électrique d'un composant électronique à la métallisation conductrice ;
- Le procédé prévoit en outre un moyen de délimitation(11) de la matière 7 formant le corps de l'objet.
- Les métallisations accrochent ou adhèrent plus au corps de l'objet qu'au support lors de la séparation de l'objet électronique ;
- Le procédé prévoit préférentiellement d'effectuer la personnalisation sur le support diélectrique et optionnellement de fixer, provisoirement ou de manière définitive, une couche de matériau, notamment en papier, sur une des faces du support, de préférence en dehors d'un emplacement de l'objet, pour renforcer et/ou améliorer le contraste du support en vu notamment d'une impression ;
- Le support comprend une pluralité de zones de réception d'objets électroniques (B1) ;
- L'information de personnalisation peut être ajoutée également sur l'objet ;
- L'information de personnalisation est effectuée par jet d'encre sur le support ou par laser sur la couche de renfort à travers le support ;
- L'information de personnalisation est effectuée par jet d'encre sur le support après un dépôt d'un fond coloré notamment blanc sur le support ;
- L'information de personnalisation est effectuée par la fixation ou réalisation d'un transpondeur RFID notamment UHF sur la zone de personnalisation ;
- L'information de personnalisation est effectuée sous forme de code barre ou code 3D.

L'invention a également pour objet un dispositif électronique portable, comportant un support, un objet électronique séparable du support et un espace réservé en surface du support recevant ou destiné à recevoir une information de personnalisation ; Cet objet se distingue en ce qu'il comprend :
- au moins une métallisation électriquement conductrice sur le support séparable,
- un corps de l'objet portable formé sur au moins une partie de la métallisation.

L'invention a également pour objet des rubans continus notamment bobinés :
- Selon un premier mode, ce premier ruban est constitué par un support continu avec une pluralité de zones accueillant chacune un dispositif électronique portable susvisé, chaque dispositif électronique étant séparé ou séparable dudit support par découpe ou prédécoupe du support ;
- Selon un second mode, un second ruban de transfert porte les dispositifs susvisés, transférés sur lui à partir du premier ruban, les dispositifs étant séparés les uns par rapport aux autres et maintenus ensemble provisoirement sur ce second ruban de transfert par une adhésion au ruban et extractible manuellement du ruban.

### Brève description des figures

D'autres particularités et avantages de l'invention apparaîtront à la lecture de la description suivante faite à titre d'exemple illustratif et non limitatif, en référence aux Figures annexées qui représentent :
- Les Figures 1 à 6B, les différentes étapes d'un mode de mise en oeuvre du procédé de fabrication d'un dispositif électronique selon l'invention ;
- Les Figures 7A à 8, les différents modes de séparation du support amovible sur lequel est fabriqué et conditionné le dispositif électronique ;
- La Figure 9, les différentes variantes de dispositifs électroniques pouvant être obtenus selon l'invention.

### Description

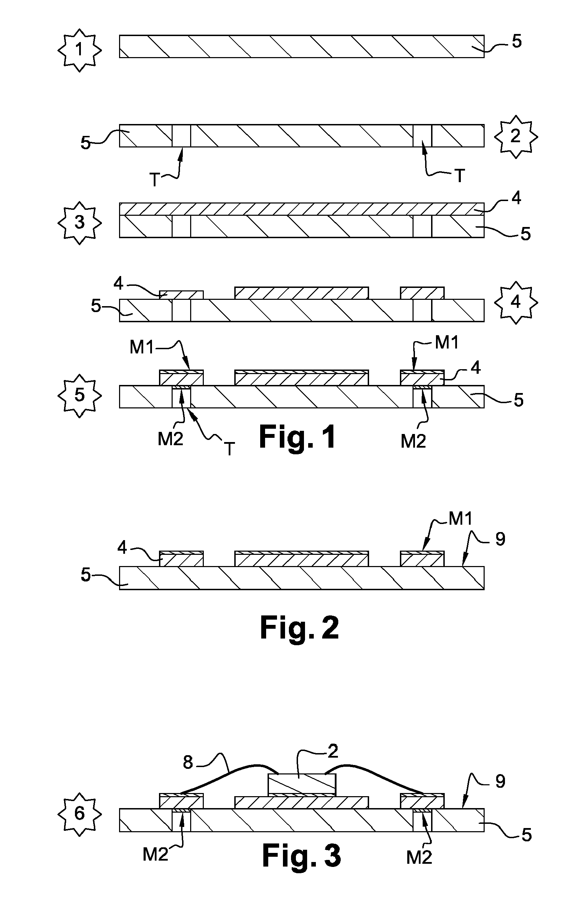

Les figures 1 à 6B décrivent les étapes d'un mode de mise en oeuvre du procédé de fabrication d'un dispositif électronique portable 1A comportant un support 5 et un objet électronique b1 séparables l'un de l'autre ; Selon ce mode, le procédé comprend une étape d'apport d'une information de personnalisation dans un espace réservé du support. Donc, le support de l'objet électronique portable reçoit ou est destiné à recevoir une information de personnalisation.

Dans un mode préféré de mise en oeuvre, le procédé reproduit une étape d'impression sensiblement comme dans la fabrication des cartes à puce où l'impression est réalisée sur le corps de carte autour d'une mini-carte à puce détachable du corps de carte.

Selon l'invention, le procédé comprend les étapes suivantes :
- une première étape de réalisation d'au moins une métallisation électriquement conductrice sur le support séparable,
- une seconde étape de réalisation du corps de l'objet portable sur au moins une partie de la métallisation. De préférence, le corps accroche ou adhère plus au corps de l'objet qu'au support pour mieux favoriser la séparation de l'objet électronique.

A cet effet, la première étape de réalisation d'au moins une métallisation (ou un jeu de métallisations) électriquement conductrice sur le support séparable est décrite notamment en relation avec les figures 1 à 5 ci-après. La seconde étape est décrite ultérieurement. La métallisation peut comprendre un élément conducteur continu comme une antenne ou des plages de contact électrique, ou des pistes, ou des pattes de connexion ou soudure d'un composant électronique quelconque de type CMS.

La Figure 1 illustre les différentes étapes 1 à 5 permettant de réaliser au moins un jeu de métallisations 4 comprenant des contacts en cuivre sur un substrat 5 amovible, c'est-à-dire un substrat détachable ou séparable de l'objet électronique. Le substrat 5, encore dénommé support dans la suite de la description, est un film diélectrique choisi pour ses propriétés de faible adhésion (bas coût comparativement au diélectrique généralement utilisé dans l'industrie de la carte à puce), de façon à ce que la résine ou matière de protection ultérieurement dispensée à sa surface se détache facilement. Le matériau de constitution d'un tel support peut par exemple être choisi parmi des polymères tels que du PET (polyéthylène téréphtalate), du PEN (Polyéthylène naphthalate), ou encore un matériau peu cher du type papier synthétique ou naturel.

Le film support diélectrique généralement utilisé pour les modules de carte à puce est un composite formé de fibres de verre dans une matrice d'époxy, ou également en polyimide (de nom commercial usuel Kapton), ...

Dans le cas d'une antenne, celle-ci peut être réalisée à plat sous forme de spirale. La description est faite préférentiellement pour des métallisations à contacts électriques, mais l'invention peut s'appliquer également à d'autres éléments conducteurs électriques tels que des plaques, des pistes ou antennes par exemple. Ainsi, dans toute la description, l'interface à contacts 4 peut être remplacée par une interface radiofréquence à antenne.

De préférence, le support 5 est déterminé avec une pluralité d'emplacements destinés à recevoir chacun un corps d'objet électronique. Chaque emplacement comprend donc aussi une zone réservée à une information contrairement à l'art antérieur. Ici, cette zone (ou espace) à information est distincte de l'emplacement du corps d'objet électronique ; Toutefois, selon une variante de mise en oeuvre, il peut y avoir chevauchement ou impression dans la même zone que l'emplacement du corps de dispositif, par exemple autour ou entre les métallisations M2. Dans d'autres cas, (par exemple des composants type CMS), des pattes de connexion ou de soudure peuvent s'étendre au delà de l'emplacement du corps du composant.

Dans le cas où les métallisations de surface sont réalisées à l'aide d'un procédé faisant intervenir des pistes d'amenées de courant (pour notamment dépôt électrolytique), on prendra soin à ce que ces pistes soient peu nombreuses et aient une configuration facilitant leur séparation, lors de la séparation des dispositifs électroniques obtenus et du support de faible adhésivité, par exemple en ayant une forme de striction, ou prédécoupe ou réduction de section à l'endroit où elles doivent être sectionnées. Aussi, celles-ci peuvent être supprimées par gravure ou coupées localement par laser ou tout autre procédé équivalent.

Une première étape 1 consiste donc à fournir un film support diélectrique 5, de préférence revêtu d'un adhésif de faible adhésivité et formant ainsi le support 5 amovible. L'adhésif peut être peu adhérent de par sa nature ou dégradable à la chaleur ou dégradable aux UV (ultraviolets) ou dégradable aux IR (infrarouges), de façon à ce que chaque métallisation ou jeu de métallisations 4, notamment en cuivre, et la résine de protection 7 ultérieurement déposés à sa surface, se détachent facilement. Les valeurs de faible adhésivité pour que les métallisations 4 et la résine de protection 7 puissent se détacher du support 5 peuvent être typiquement comprises entre 0,5 et 5 Newton /cm au test de résistance au pelage à 90 degrés. La vitesse de pelage peut être par exemple de 30 cm / minute ou plus.

Le support 5 est ensuite percé, notamment par poinçonnage, tel qu'illustré à l'étape 2. Les trous T obtenus permettront ultérieurement de réaliser un traitement de surface des métallisations 4 (titane, or, argent, palladium, nickel...). Ces trous permettent également de faciliter la séparation du support amovible 5 et du dispositif électronique obtenu puisque les métallisations n'adhérent que sur un cadre ou rebord fin autour des ouvertures ou trous obtenus par poinçonnage.

A l'étape 3, on effectue une fixation provisoire, notamment par lamination avec ou sans adhésif intermédiaire, d'une feuille électriquement conductrice 3, notamment en cuivre, sur le support diélectrique 5 amovible.

L'étape suivante 4 consiste ensuite à effectuer une gravure chimique de la feuille conductrice 3 pour réaliser la forme souhaitée des contacts externes 4 pour le dispositif électronique en fabrication.

A l'étape 5, un traitement de surface M1, M2 des parties en cuivre est préférentiellement effectué. Ce traitement des métallisations 4 consiste à rajouter une couche de métallisation additionnelle, de type Ni / Pd/ Au (Nickel/ Palladium /Or) par exemple, formant une couche de passivation M1 et/ou M2 sur les contacts 4. Ce traitement peut se faire sur les deux faces de la feuille de cuivre gravée. La face en contact avec le support 5 amovible peut en effet être également traitée en surface à travers les trous T préalablement percés dans le support amovible 5. Ainsi, les contacts externes 4 destinés à affleurer sensiblement la surface externe du dispositif électronique, à l'épaisseur de la couche de traitement M2 près ou de la couche d'adhésif du support amovible 5, sont également traités.

Selon une variante de mise en oeuvre, le support amovible 5 ci-dessus peut être non poinçonné, comme illustré à la Figure 2. Dans ce cas, les contacts externes 4 peuvent rester en cuivre et être éventuellement protégés de l'oxydation par une passivation organique ou autre traitement de surface préalable ou ultérieur.

Selon une autre variante de mise en oeuvre, le substrat ci-dessus peut être poinçonné, comme illustré à la Figure 1, d'un nombre de trous T supérieur à ceux nécessaires pour le traitement par métallisation M2 des contacts 4, ceci afin d'améliorer la séparation ultérieure entre le support amovible 5 et le dispositif électronique obtenu, la surface en vis-à-vis étant en effet plus faible.

Alternativement, les plages de contact 4 peuvent être perforées pour limiter l'adhésion et pour économiser les métallisations et/ou permettre une perméabilité électromagnétique dans le cas où l'objet comprend également une antenne radiofréquence, par exemple gravée sur le support.

Le cas échéant, on réalise une antenne (non représentée) par exemple au même niveau que les contacts ou pistes conductrices, notamment en périphérie et/ou dans une zone centrale par rapport aux plages de contacts 4.

Selon une alternative à l'opération de gravure préférée dans l'invention, on peut prévoir de fixer ou d'imprimer une grille conductrice électriquement, notamment par jet de matière conductrice, sur le support 5 amovible pour former des contacts électriques 4 et/ou des pistes et/ou au moins une antenne.

A l'étape 6 (Fig. 3), on procède au report d'une puce électronique 2 de circuit intégré sur la face 9 du support amovible 5 comprenant les métallisations 4. Elle peut aussi être reportée directement sur ces éléments conducteurs (plages, pistes, spires d'antenne). La puce 2 est alors connectée aux contacts métalliques 4 par connexion filaires 8 par exemple. Après cette fixation de la puce, notamment par collage, on peut éventuellement utiliser un plasma de nettoyage pour améliorer l'adhésion de la résine ou matière de protection 7, ultérieurement dispensée, sur les contacts 4 métallisés. Dans une variante de réalisation, la connexion électrique de la puce 2 de circuit intégré avec les contacts 4 peut également être réalisée par la technique connue de « flip chip », ou puce retournée.

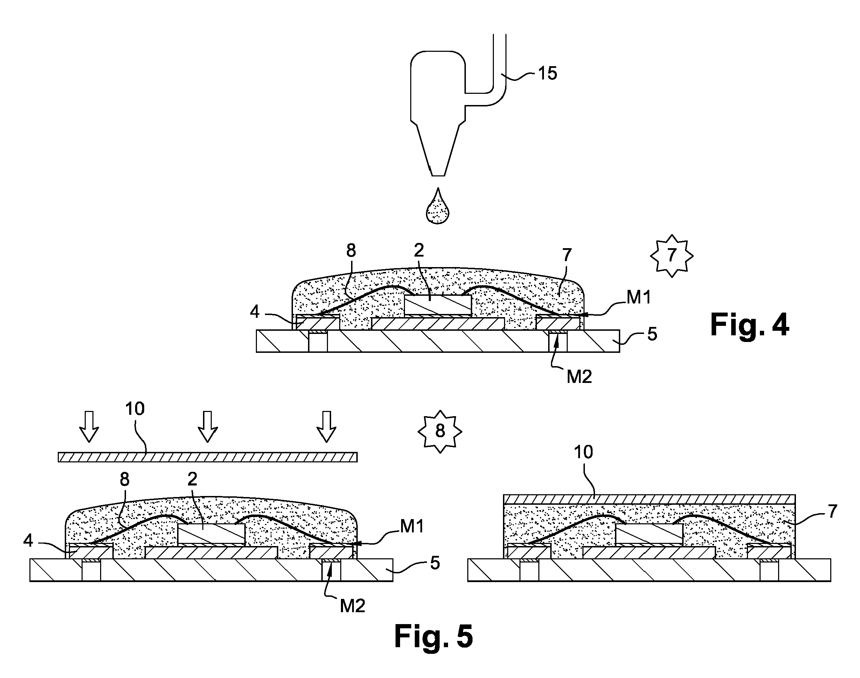

A l'étape 7 (Fig. 4), on procède à la dispense d'une résine ou matière isolante de protection 7 pour enrober la puce ainsi que ses connexions 8 (fils), au moyen d'un équipement 15 de dispense classiquement utilisé dans le domaine de la carte à puce.

De préférence, on prévoit une adhésion des métallisations 4 qui soit plus importante au contact de la résine de protection 7 qu'au contact du support amovible 5. Cette adhésion peut en outre être améliorée par différents procédés connus, tels que par exemple par augmentation de la rugosité du cuivre des contacts 4, par l'augmentation de la rugosité de surface (la métallisation additionnelle M1, M2, de type Ni /Pd /Au suit alors cette rugosité), par plasma de nettoyage avant dispense de la résine de protection, par points d'ancrage de la résine de protection dans des parties conductrices des métallisations.

A l'étape 8 (Fig. 5), on peut reporter une pastille de renfort 10 découpée à la taille finale du dispositif. Cette pastille présente notamment une surface délimitant le contour final du dispositif électronique. Ainsi, la pastille est reportée sur la résine de protection 7 alors que cette-dernière n'est pas durcie. Cette pastille de renfort 10 permet non seulement de rigidifier et protéger mécaniquement le dispositif électronique, mais aussi d'obtenir un dispositif électronique géométriquement homogène, en présentant notamment une surface plane. Cette pastille de renfort est avantageusement conditionnée en rouleau et est découpée à la taille finale du dispositif.

Selon une variante de réalisation, la pastille 10 peut aussi être formée en série, par moulage par exemple, et conditionnée sur des supports amovibles faiblement adhésifs par exemple.

La pastille est placée sur la résine de protection au moyen d'un équipement de report automatique classiquement utilisé dans les procédés de fabrication de cartes.

Cette pastille peut par exemple présenter une décoration, réalisée par impression, par tampographie ou tout autre procédé équivalent, sur sa surface plane destinée à former une surface externe opposée à celle supportant les contacts métalliques 4. La surface supportant les contacts métalliques 4 est elle-même formée par la résine de protection 7.

La pastille 10 se positionne sur le haut des fils de connexions 8. Sous l'action du poids de la pastille 10, la résine de protection 7 se répartie par capillarité jusqu'aux contours du dispositif pour former ses bords latéraux et lui conférer son épaisseur finale.

La nature de la pastille peut être un composite tel qu'un verre époxy ou un polymère thermoplastique tel qu'un PET (polyéthylène téréphtalate), PEN (polyéthylène naphtalate), PC (polycarbonate) etc... L'épaisseur typique de la pastille peut varier de 50µm à 300µm selon sa matière, l'espace que l'on veut laisser à la puce et ses connexions et l'épaisseur souhaitée du dispositif électronique final.

La résine ou matière de protection peut être une résine à polymérisation thermique ou à polymérisation UV. De manière préférée, la résine est durcie par insolation sous rayonnement UV. Une telle résine présente en effet des avantages intéressants. En particulier, du fait du faible apport thermique d'une telle polymérisation, des supports 5 amovibles peu coûteux et supportant mal la température peuvent être utilisés. De plus le dispositif électronique ne risque pas d'être déformé du fait de dilatations différentielles trop importantes entre les différents matériaux. Enfin, l'insolation UV peut être réalisée à travers la pastille 10, lorsque son matériau de constitution est choisi pour laisser passer les longueurs d'onde UV, comme à travers le support amovible 5 lorsqu'il est réalisé dans un matériau transparent aux UV.

L'épaisseur de la résine varie selon l'épaisseur de l'objet final à réaliser et selon l'épaisseur de la pastille de renfort. Pour une carte nano-SIM, encore notée sous le sigle 4FF, dont l'épaisseur est normalisée à 0,67mm, par exemple, l'épaisseur de la résine entre la surface interne de la pastille de renfort 10 et la surface interne du support amovible 5 sera comprise entre 300 et 600µm.

Selon une variante de réalisation, le support diélectrique 5 amovible est chauffé à une température modérée, c'est-à-dire à une température inférieure à la température de polymérisation de la résine 7, lorsque celle-ci est polymérisable à chaud, de manière à fluidifier cette dernière et favoriser sa répartition jusqu'au contour du dispositif électronique.

La pastille peut être de couleur, ou teintée dans la masse. Ainsi, lorsque la résine de protection 7 est transparente, la face autour des contacts 4 apparait colorée.

De manière facultative, il est possible de prévoir un moyen d'arrêt apte à éviter le fluage de la résine de protection 7 et l'apparition de bavures sur le dispositif final. Ce moyen d'arrêt s'étend le long du contour du dispositif final et est disposé sur le support amovible 5 et /ou sur le contour de la pastille de renfort 10. Un tel moyen d'arrêt a pour fonction d'arrêter le fluage de la résine de protection, afin de conférer au dispositif électronique final des bords parfaitement rectilignes au moment du détachement du support amovible 5.

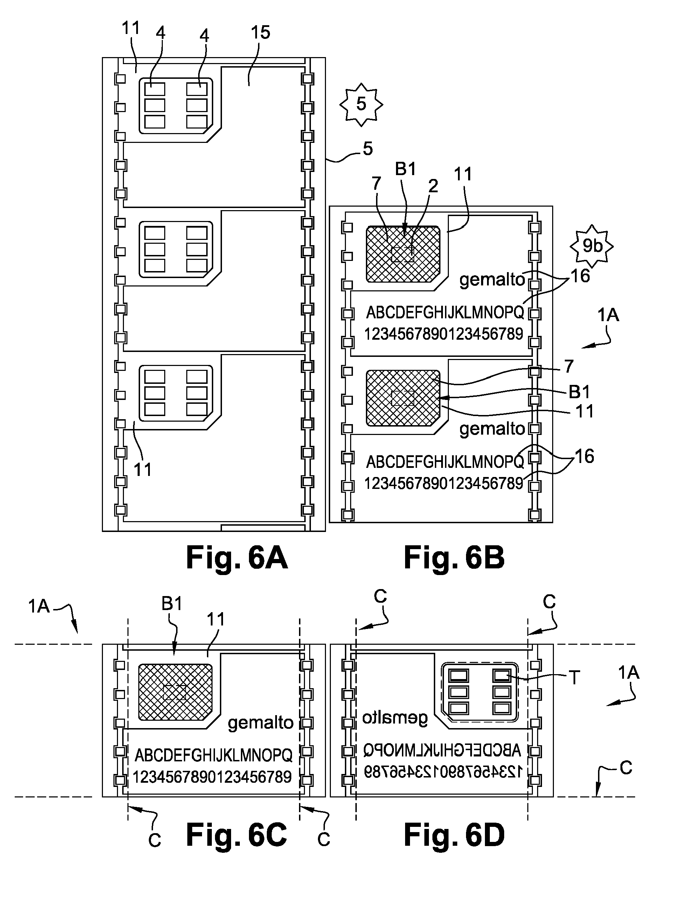

Sur le support amovible 5 tel qu'illustré sur la Figure 6A, ce moyen d'arrêt peut être réalisé soit par gravure métallique du contour, soit par apport de matière. Ainsi, lorsqu'il est réalisé par gravure métallique par exemple, il peut avantageusement se présenter sous forme d'un contour métallique gravé dans la feuille métallique 3, fixée provisoirement sur le support amovible 5, simultanément à la réalisation des contacts 4 du futur dispositif électronique sur le support amovible. Un tel contour métallique gravé est représenté sur la Figure 6A sous la référence 11. Dans ce cas, ce contour métallique est réalisé sur une largeur suffisante pour que le métal de constitution adhère plus au support amovible 5 qu'au fin cordon de résine de protection pouvant éventuellement fluer à sa surface. Ainsi, au moment de la séparation du support amovible 5, le contour métallique 11 et le fin cordon de résine ayant éventuellement flué sur sa surface, ne se délaminent pas en même temps que les contacts 4 et adhèrent toujours au support 5 amovible.

Pour prévenir encore mieux sa délamination et éviter que le contour métallique 11 ne vienne avec le dispositif lors de son détachement, le contour métallique 11 peut également être accroché par de nombreuses amenées de courant qui le retiennent. Aussi, toujours dans le même but, ce contour métallique 11 peut être étendu sur une grande partie du support 5 amovible voir jusqu'à son bord. Il peut aussi être retenu par plaquage d'une pièce contre le contour au moment du détachement du support 5 amovible.

Ce contour métallique 11 pouvant être de grande surface, il sera préférentiellement métallisé par la technique de « spot plating » consistant à effectuer un dépôt électrolytique dans des zones localisées de surfaces réduites et préférentielles (procédé de sélectivité). Un tel dépôt de métal permet de réduire les quantités de métal utilisées et d'éviter l'utilisation de métal précieux tel que l'or. Le contour métallique peut par exemple être réalisé en cuivre-nickel.

Selon une autre variante de réalisation, le moyen d'arrêt peut par exemple être réalisé par apport de matière. Cet apport de matière peut être réalisé sur le contour de la face de la pastille 10 destinée à reposer sur la résine de protection 7, ou sur le support amovible le long du contour final du dispositif. Cet apport de matière peut être réalisé par impression de matière ou encore par dispense d'un matériau élastomère tel qu'un silicone par exemple. Il forme ainsi un rebord ou une surépaisseur.

Le moyen d'arrêt peut également faire partie intégrante de la pastille 10 lorsque celle-ci est réalisée par une technique de moulage par exemple.

En variante, la réalisation du corps de l'objet peut être effectuée par surmoulage directement au format final de l'objet.

Dans ce cas, la hauteur du moyen d'arrêt, ou rebord, est égale à toute ou partie de l'épaisseur finale du dispositif.

A l'étape 9b (fig.6B), l'invention prévoit d'utiliser l'espace (ou zone) réservé de personnalisation 15 pour réaliser avantageusement une impression graphique 16 notamment du logo d'une société et/ou d'y adjoindre des informations propres à l'objet portable ou quelconque information. En cas de carte SIM de téléphonie mobile, l'information peut comprendre un code de déblocage PUK ou code d'identification PIN. En cas de carte bancaire, l'information peut comprendre un code bancaire ou tout autre identifiant ou code.

L'apport d'information, notamment graphique, peut être réalisé à tout moment de la fabrication du dispositif électronique ou de l'objet notamment avant ou après la réalisation des métallisations, avant ou après la connexion d'un microcircuit à l'interface, la réalisation du corps de l'objet ou une étape de personnalisation électrique de l'objet. L'impression peut comprendre une technique d'impression par jet d'encre, offset, sérigraphie...

Alternativement, l'espace (ou zone) réservé peut être utilisé pour imprimer un moyen permettant une lecture ultérieure tel un code barre ou un code 3D, une photo. Il peut être utilisé pour porter un transpondeur radiofréquence notamment de type RFID (RF, UHF...) associé à chaque objet portable. L'antenne RFID peut être réalisée en même temps que les métallisations.

De préférence, on réalise la personnalisation graphique après l'assemblage et connexion du microcircuit de l'objet.

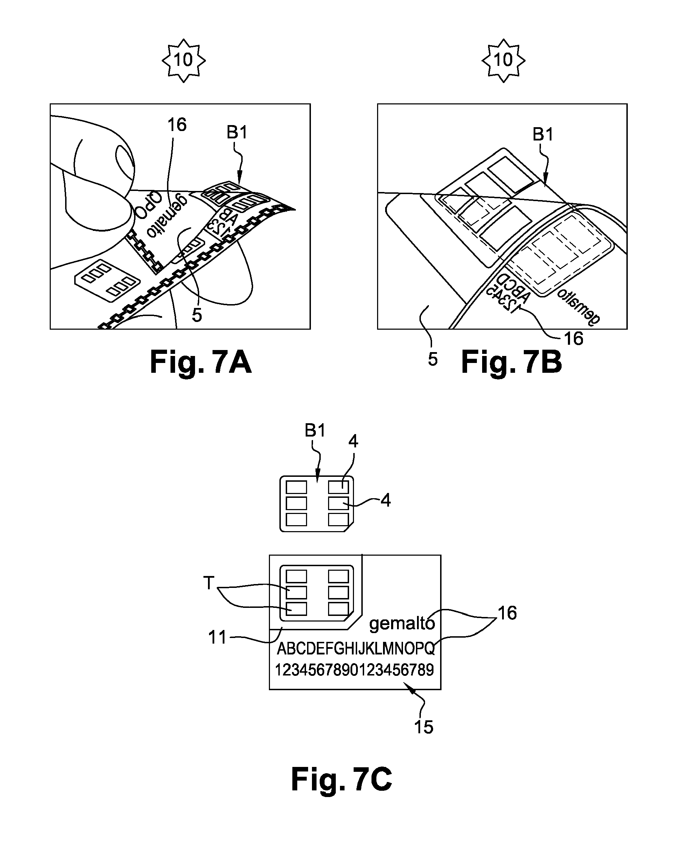

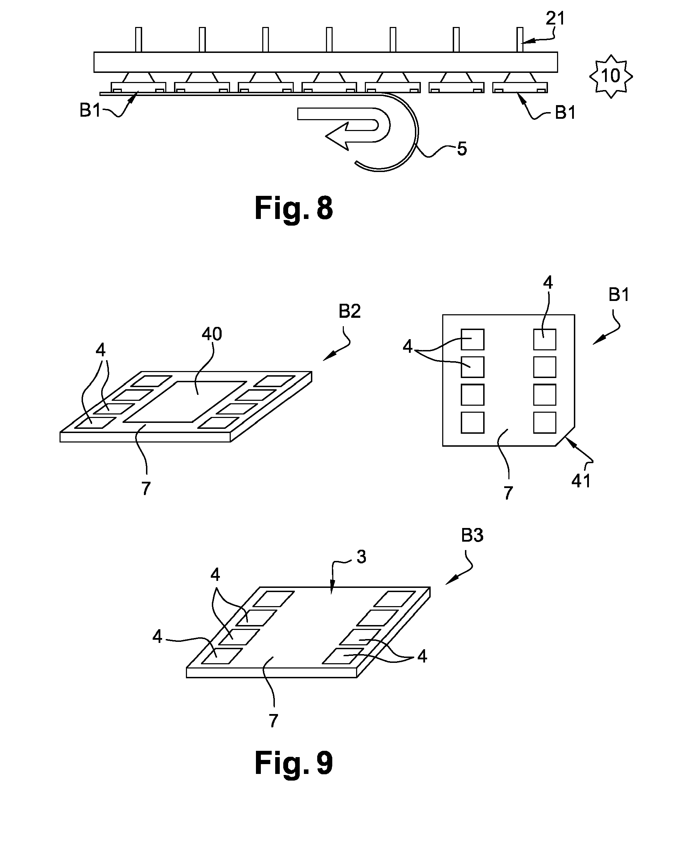

A l'étape 10 (Fig.7A, 7B, 8), on procède ensuite à une séparation de l'objet électronique obtenu B1, dont les contacts 4 adhérent à la résine de protection 7, du support amovible 5. Cette séparation peut être réalisée de différentes manières.

Aux figures 7A, 7B, l'objet est simplement séparé manuellement de son support.

Alternativement, tous les moyens de séparation décrits dans la demande de brevet WO2014044684 peuvent être utilisés notamment chauffage, destruction du support.

De préférence, le film support 5 est déterminé avec une pluralité de zones de réception de dispositifs électroniques 1A ou objets B1 pour réaliser une pluralité de dispositifs ou d'objets en série, qui sont conditionnés sur le support amovible 5 ; Ce film support peut lui-même être bobiné par exemple. Lors de la séparation du support amovible 5, l'objet électronique B1 se détache et il ne reste sur le support 5 que les trous T préalablement poinçonnés sur le support 5 et le moyen d'arrêt 11 de la résine éventuellement ménagé le long du pourtour extérieur du dispositif 1 et l'information de personnalisation.

A la figure 8, les objets B1 sont fixés à des ventouses pendant que le film support est enlevé. On peut alors procéder, sur un tel support 5, à une saisie des objets notamment par ventouses (Fig. 8) disposées sur des préhenseurs mobiles 20 robotisés après avoir chauffé « C » le support 5, notamment par lampes à infrarouge, pour dégrader l'adhésion de l'adhésif maintenant provisoirement les dispositifs 1 sur le support 5 et permettre ainsi la séparation du dispositif 1 avec son jeu de métallisations (contacts, pistes), par rapport au support 5. L'adhésif peut être un adhésif thermoplastique ou thermo fusible.

En alternative, on peut effectuer une destruction du support notamment par brûlage comme dans le cas d'un support 5 en papier par exemple. On peut également effectuer une séparation des objets B1 individuels par pelage du substrat 5. les objets B1 étant maintenus par aspiration sur des buses 21.

A la Figure 9, les objets électroniques 1A à 1C obtenus comprennent ici la forme de mini cartes 1A, 1B, 1C à contacts électriques 4 affleurant leur surface principale. La résine de protection 7, constituant le corps isolant de la mini carte, comprend une face 3 pouvant se situer au même niveau que les plages de contact 4. Autrement dit, les différentes métallisations 4 sont espacées de matière isolante, c'est-à-dire de la résine de protection 7, et affleurent sensiblement la face externe 3 du dispositif formée par la résine de protection 7. Le cas échéant, selon les variantes de traitement de surface, il peut y avoir une légère différence de niveau entre les métallisations 4 et la résine de protection 7. En effet, si le support 5 amovible comporte ou non une couche d'adhésif, la couche de métallisation M2 du traitement de surface située dans le trou T du support amovible 5, à distinguer de la métallisation 4 du support, peut avoir un niveau supérieur au niveau de la face externe 3 de la résine de protection 7. Selon l'épaisseur déposée de la métallisation M2 de traitement, les plages de contact 4 du dispositif 1 peuvent affleurer la surface principale 3 de la résine de protection 7, d'une valeur comprise entre 0µm et de préférence 25µm, voire 50 µm.

L'objet 1A peut comporter, au centre, une zone 40 pour une métallisation quelconque (contact, antenne...). L'objet 1B est parallélépipédique et l'objet 1C comprend un détrompeur 41 en plus du précédent.

Grâce à l'invention, on peut agencer des composants électriques / électroniques ou des métallisations 4 du dispositif électronique, avant l'étape d'enrobage, de manière que la surface externe des composants soit au même niveau, ou sensiblement au même niveau, que la surface externe 3 de la résine de protection 7 dispensée au moment de l'étape d'enrobage.

Grâce à l'invention on peut ainsi réduire au maximum l'épaisseur des dispositifs électroniques. La puce peut être placée directement sur une des métallisations 4 ou directement sur le support amovible 5. Le nombre d'éléments superposés et constituant le dispositif électronique est réduit. En particulier, les dispositifs électroniques réalisés selon l'invention ne comprennent plus de film support diélectrique dans leur constitution finale. Les étapes de procédé sont moins nombreuses, les étapes de surmoulage d'un corps de dispositif étant notamment supprimées. Le report de la pastille 10 au format final du dispositif électronique, sur la résine de protection 7, permet de réaliser en une seule étape l'encapsulation de la puce et de ses connexions, et la réalisation du corps du dispositif électronique final.

Dans une autre variante, concernant la fixation de la puce, celle-ci peut être collée directement sur la face 9 du support amovible 5 de faible adhésivité, contrairement à la Figure 3. Ainsi après retrait du support 5, la colle de fixation de la puce est au même niveau que la face externe 3 de la résine de protection 7 du dispositif électronique 1, ou sensiblement au même niveau que les métallisations 4.

Dans une autre alternative, on peut même pousser la diminution de l'épaisseur de l'objet à son maximum en déposant la puce 2 directement sur le support 5 de faible adhésivité ou un support 5 enduit d'un adhésif décrit précédemment. Ainsi après retrait du support 5, la face arrière de la puce 2 se retrouve en surface 3 du dispositif électronique 1.

Le cas échéant, un composant électronique comme un capteur d'empreinte peut venir en surface de la face 3 du dispositif électronique car monté comme la puce 2, directement contre la surface 9 du support amovible 5. Ainsi, un composant, tel qu'une puce électronique ou élément réalisant une fonction de capteur d'empreinte, peut être monté de manière à offrir une surface plane affleurant la surface externe 3 du dispositif électronique.

Cette invention permet aussi de réduire l'épaisseur des cartes SIM si besoin car, seuls les contacts ou métallisations utiles sont conservés, après transferts de ceux-ci dans la résine de protection et séparation de l'épaisseur de support amovible. De plus les contacts sont intégrés dans la résine de protection et présentent très peu, ou pas, de surépaisseur. Le procédé de fabrication des dispositifs électroniques selon l'invention présente un nombre réduit d'étapes, ce qui se traduit par une réduction en termes de coûts.

Alternativement, le ruban comportant les dispositifs électroniques peuvent être prédécoupé ou découpé au laser ou par poinçonnage. Ainsi, la bordure perforée peut être enlevé pour ne laisser que les dispositifs électroniques isolés les uns des autres.

Les dispositifs 1 B électroniques peuvent être présentés en étant fixés sur un ruban supplémentaire adhésif ou amovible alors qu'ils sont dans un état séparé ou prédécoupé des autres dispositifs.

Le ruban supplémentaire peut être de couleur déterminé (blanc, noir...) et comporter une personnalisation visible à travers le support 5. Cette personnalisation peut être effectuée par laser à travers la transparence du support 5 ou directement sur le support améliorant ainsi le contraste.

Ainsi, le premier support 5 peut être fixé à un second ruban ou second support pour le renforcer, lui conférer plus de tenue, d'épaisseur ou constituer un fond de contraste selon les besoins de la clientèle ou utilisateur.

Ce second support peut être déposé sur l'une des faces du premier film support. Avantageusement, il peut être déposé du côté de l'objet de manière à faire une compensation d'épaisseur. Le cas échéant, l'objet est contenu dans une cavité ou évidement du second support. Le corps de l'objet peut à la limite être coffré dans un évidement ou cavité du second support et au contact de la paroi de la cavité sans dépasser la hauteur de la cavité.

Plutôt qu'être éliminée au cours de la gravure, la métallisation 3 peut persister sur au moins la zone réservée à l'information. Ainsi, la métallisation de cette zone permet de renforcer le film support et d'avoir un meilleur état de surface ou contraste d'impression graphique ou autre marquage (notamment laser, jet d'encre...). Ainsi, le corps du dispositif peut être un film métallisé sur toute la surface du support.

La couche métallisée peut s'étendre en continu ou être isolé d'un cadre d'arrêt de la matière du corps de l'objet notamment pour des raisons de traitement électrolytique sélectif.

En utilisation, les dispositifs sont livrés en étant conditionnés en forme de bobines de ruban. Les dispositifs peuvent être extraits d'un premier ruban (support 5) notamment par découpe, ou prédécoupe. Les dispositifs peuvent être transférés sur un autre ruban ou second support en étant découpés ou séparés les uns des autres. Ainsi, on peut conditionner chaque dispositif comme des étiquettes autocollantes ou non, extractibles d'un ruban.

Ensuite, les objets électroniques peuvent être extraits de leur emplacement sur le film support 5 par décollage ou élimination du film support.

Grâce à l'invention, un client final peut recevoir le dispositif électronique (isolé des autres) avec les informations nécessaires notamment par courrier par exemple avec une fixation provisoire sur une feuille de correspondance. L'objet peut être extrait de son film support 5 pour utilisation avec un appareil de communication tandis que le film support avec les informations est conservé pour mémoire des informations. Les dimensions du film support sont particulièrement discrètes et peu encombrantes.

Le film support peut recevoir une métallisation sur pratiquement toute sa surface pour améliorer sa tenue mécanique et le contraste des informations.

## Revendications

1. Procédé de fabrication d'un dispositif électronique portable (1A) comportant un support (5), un objet électronique (B1) séparable du support et un espace réservé (15) en surface du support recevant ou destiné à recevoir une information de personnalisation (16), **caractérisé en ce qu'**il comprend les étapes suivantes :
- réalisation d'au moins une métallisation (4) électriquement conductrice sur le support séparable,
- réalisation du corps (7, 10) de l'objet portable sur au moins une partie de la métallisation.

2. Procédé de fabrication selon la revendication 1, **caractérisé en ce qu'**il comprend en outre préalablement à la réalisation du corps, une étape de report et de connexion électrique d'un composant électronique (2) à la métallisation conductrice (4).

3. Procédé selon l'une des revendications 1 à 2, **caractérisé en ce qu'**il prévoit en outre un moyen de délimitation(11) de la matière 7 formant le corps de l'objet.

4. Procédé selon l'une des revendications 1 à 3, **caractérisé en ce qu'**il prévoit de fixer au moins provisoirement une couche de matériau, notamment en papier, sur une des faces du support, de préférence en dehors d'un emplacement de l'objet, pour renforcer et/ou améliorer le contraste du support.

5. Procédé selon l'une quelconque des revendications précédentes, **caractérisé en ce que** le support (5) comprend une pluralité de zones de réception d'objets électroniques (B1).

6. Procédé de fabrication selon l'une des revendications précédentes, **caractérisé en ce qu'**il comprend une étape d'apport d'une information de personnalisation (15) effectuée par jet d'encre sur le support ou par laser sur la couche de renfort à travers le support.

7. Procédé de fabrication selon la revendication précédente, **caractérisé en ce que** l'information de personnalisation(15) est effectuée par jet d'encre sur le support après un dépôt d'un fond coloré notamment blanc sur le support.

8. Procédé de fabrication selon la revendication 1, **caractérisé en ce que** l'information de personnalisation est effectuée par la fixation ou réalisation d'un transpondeur RFID notamment UHF sur la zone de personnalisation.

9. Procédé de fabrication selon la revendication 1, **caractérisé en ce que** l'information de personnalisation est effectuée sous forme de code barre ou code 3D.

10. Dispositif électronique portable (1A), comportant un support (5), un objet électronique (B1) séparable du support et un espace réservé (15) en surface du support recevant ou destiné à recevoir une information de personnalisation (16), **caractérisé en ce qu'**il comprend :
- au moins une métallisation (4) électriquement conductrice sur le support séparable,
- un corps (7, 10) de l'objet portable formé sur au moins une partie de la métallisation.

11. Ruban (5A) notamment bobiné, comprenant un support 5 avec une pluralité de zones accueillant chacune un dispositif électronique portable (1A), selon la revendication 10, chaque dispositif électronique (1) étant séparé ou séparable dudit support (5) par découpe ou prédécoupe du support.

12. Ruban (5) notamment bobiné, selon la revendication précédente **caractérisé en ce que** qu"il porte les dispositifs selon la revendication 10, séparés les uns par rapport aux autres et maintenus ensemble provisoirement par une adhésion au ruban et extractible manuellement du ruban.
